# EUROPÄISCHE PATENTSCHRIFT

(11) **EP 2 356 924 B1**
(45) Veröffentlichungstag und Bekanntmachung des Hinweises auf die Patenterteilung: **04.01.2012**
(21) Anmeldenummer: 10153584.7
(22) Anmeldetag: 15.02.2010
(51) Int. Cl.: A47C 27/00, B68G 15/00

(54) **Schaumstoffmatratzenentkerner**
Foam mattress core remover
Dénoyauteur de matelas en mousse

(43) Veröffentlichungstag der Anmeldung: 17.08.2011
(73) Patentinhaber: Fillmatic Polsterindustrie-Maschinen GmbH, 68169 Mannheim (DE)
(72) Erfinder: Rudolf Erich, 68519 Viernheim (DE); Stoll Axel, 67591 Hohen-Sülzen (DE)
(74) Vertreter: Schmid, Rudolf

(56) Entgegenhaltungen:
- WO-A1-2009/018600
- DE-A1-102006 032 659
- DE-B3-102005 030 765

## Beschreibung

Die Erfindung betrifft einen Schaumstoffmatratzenentkerner, d. h. eine Vorrichtung zum Entfernen von aus Schaumstoffmatratzen ausgeschnittenen Profilen.

Eine derartige Vorrichtung ist beispielweise in der WO 2009/018 600 A1 beschrieben.

Zur Durchlüftung und/oder zur Gestaltung von Zonen unterschiedlicher Härte werden Schaumstoffmatratzen durch Profilschnitte bearbeitet. Beim Schneiden verbleiben die ausgeschnittenen Profile zunächst als sogenannte Kerne in den Schaumstoffmatratzen und müssen arbeitsaufwändig heraus gezupft werden.

In vielen Schaumstoffwerken gibt es Eigenbaulösungen zum Entfernen von aus Schaumstoffmatratzen ausgeschnittenen Profilen, die alle eines gemein haben: Die Matratze wird zum Entkernen um 180° gebeugt, damit sich auf der Außenseite der Biegung freigeschnittene Ränder der Schaumstoffmatratzen öffnen und man leichter die Kerne aus der Schaumstoffmatratze entnehmen kann. Arbeiter pflücken in diesem Falle die Kerne an der Umlenkungsstelle außen aus der Schaumstoffmatratze heraus.

In einigen Fällen hat man zum Herauspflücken auch Bürsten oder Lamellenräder mit Weichplastiklamellen an der Außenseite der Umlenkungsstelle montiert, mit denen man maschinell die Kerne heraus bürstet oder klopft. Eine Maschine mit einer Kombination zweier solcher 180°-Umlenkungen wird kommerziell in Italien hergestellt. Bei vielen Profilförmen geschieht aber diese maschinelle Reinigung nur mit einem Teilerfolg. Manuelle Nacharbeit ist häufig erforderlich, bei der die Matratze auch von Hand herumgedreht werden muss. Man hat also trotz der maschinellen Vorreinigung zum vollständigen Entfernen von aus Schaumstoffmatratzen ausgeschnittenen Profilen beschwerliche körperliche Arbeit mit hoher Rückenbelastung zu verrichten.

Aufgabe der Erfindung ist es, eine Vorrichtung zum Entfernen von aus Schaumstoffmatratzen ausgeschnittenen Profilen zu schaffen, mit dem die Nachteile des Standes der Technik vermieden werden können.

Die Lösung erfolgt mit einer Vorrichtung zum Entfernen von aus Schaumstoffmatratzen ausgeschnittenen Profilen mit den Merkmalen des Anspruchs 1.

Gemäß der Erfindung weist eine Vorrichtung zum Entfernen von aus Schaumstoffmatratzen ausgeschnittenen Profilen mindestens ein Transportband auf, auf das die Schaumstoffmatratze aufzulegen ist und das die Schaumstoffmatratze einer Umlenkvorrichtung zuführt für Biegung der Schaumstoffmatratze an der Umlenkvorrichtung um vorzugweise 180°. An der Umlenkvorrichtung sind eine einstellbare Bürstspaltöffnung, eine einstellbare Rückendruckrolle und eine einstellbare Bürste vorgesehen. Eine Oberfläche der der Bürstspaltöffnung zugeführten Schaumstoffmatratze ist durch die einstellbare Bürstspaltöffnung zugänglich und eine der zugänglichen Oberfläche der Schaumstoffmatratze gegenüberliegende Oberfläche der Schaumstoffmatratze ist von der Rückendruckrolle in Richtung der Bürstspaltöffnung so beaufschlagbar, dass die durch die einstellbare Bürstspaltöffnung zugängliche Oberfläche der Schaumstoffmatratze gedehnt ist. Die Bürste ist so zu der durch die einstellbare Bürstspaltöffnung zugänglichen Oberfläche der Schaumstoffmatratze positionierbar, dass die ausgeschnittenen Profile durch die einstellbare Bürstspaltöffnung von der Bürste erfassbar sind und beim Fördern der Schaumstoffmatratze entlang der Bürstspaltöffnung von der vorzugsweise einstellbar rotierenden Bürste ausgezogen werden können. Erfindungsgemäß wird die Reinigungswirkung für die Schaumstoffmatratze dadurch maschinell verbessert, dass die spezielle Anordnung von Transportbändern, einstellbarer Bürstspaltöffnung und einstellbarer Rückendruckrolle es ermöglicht, die Schaumstoffmatratze genau an der Biegung der 180° Wendung durch Druck von hinten einstellbar so durch die Bürstspaltöffnung herauszudrücken, dass die einstellbare Bürste die in der Oberfläche der Schaumstoffmatratze feststeckenden, ausgeschnittenen Profile erfassen und ausbürsten kann. Durch die Einstellung von Bürstspaltöffnung, Position der Rückendruckrolle und Bürstenposition ist die maschinelle Entkernung in ihrer Wirkung so optimierbar, dass auch schwierig zu reinigende Profilschnitte fast vollständig gereinigt aus der Maschine kommen, weil es möglich ist, die Umlenkungsgeometrie genau der Matratzendicke und der Form der Profilschnitte anzupassen.

Gemäß einer bevorzugten Ausgestaltung der Erfindung übernimmt eine Luftförderanlage die ausgebürsteten Profilkerne und führt sie durch eine Rohrleitung einer Abfallsammelstelle zu, die auch bis zu 80 m weit entfernt sein kann.

Die Maschine ist so aufgebaut, dass der Bediener nach dem Auflegen der Matratze und dem Start des Vorganges nach wenigen Sekunden die gereinigte Seite wieder auf dem Transportband vor sich sieht, um zu kontrollieren, und eventuell einzelne verbliebene Kerne herauszupflücken. Mit einem zweiten Startbefehl schickt er die Matratze zur Reinigung der anderen Seite. Jeweils die auf dem Transportband liegende Unterseite wird gereinigt, und erscheint dann wieder auf dem Einlaufband als Oberseite, zur Sichtkontrolle und bequem zugänglich für die Nachreinigung, falls nötig.

Bei Kreuzschnitten kann nach Drehung der Matratze um 90° auch die quer zum ersten Transport verlaufende Schnittrichtung gereinigt werden, falls wegen der Tiefe der Einschnitte die Entkernung im ersten Durchlauf nur in Längsrichtung erfolgte. Die Matratzen können längs und quer durch die Maschine laufen.

Bei Verknüpfung mit einer Fillmatic-Stapelroboteranlage zur Beschickung und Entsorgung kann jeweils auf dem Einlaufband der Schaum-Entkern-Maschine (SEK) die soeben gereinigte Seite kontrolliert werden, ohne dass körperliche Arbeit entsteht. In diesem Fall übernimmt der Stapelroboter die Zuführung frischer Matratzen und das Aufstapeln der gereinigten Matratzen, der Bediener quittiert nur noch nach Sichtkontrolle. Für leicht zu reinigende Profile, bei denen keine Kontrolle der Reinigung nötig ist, gibt es ein Automatikprogramm, das vollständigen Roboterbetrieb ermöglicht.

Die Erfindung wird im Folgenden anhand eines bevorzugten Ausführungsbeispiels dargestellt. Es zeigen:
Fig. 1 eine Vorrichtung zum Entfernen von aus Schaumstoffmatratzen ausgeschnittenen Profilen nach dem Stand der Technik, und
Fig. 2 einen Querschnitt durch eine Umlenkvorrichtung der Vorrichtung zum Entfernen von aus Schaumstoffmatratzen ausgeschnittenen Profilen gemäß der Erfindung.

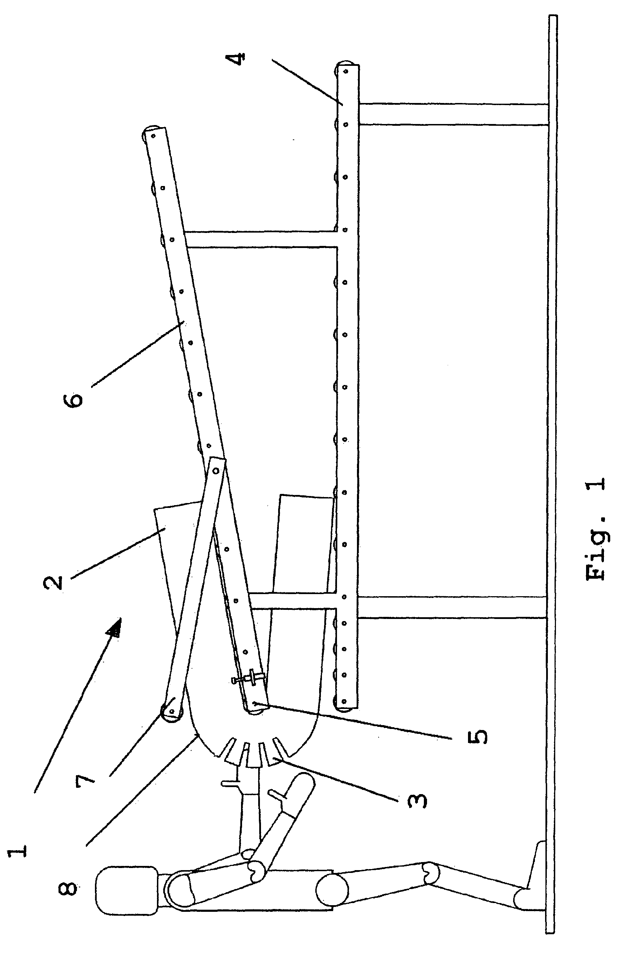

Fig. 1: Eine Vorrichtung 1 zum Entfernen von aus einer Oberfläche einer Schaumstoffmatratzen 2 ausgeschnittenen Profilen zwischen verbleibendem Schaumstoffmaterial 3 weist eine erste Fördereinrichtung 4 auf, auf die die Schaumstoffmatratze 2 aufzulegen ist und die die Schaumstoffmatratze 2 einer vorderen Kante 5 einer zweiten Fördereinrichtung 6 zuführt, um die die Schaumstoffmatratze 2 manuell unter einen Bügel 7 um etwa 180° gebogen und Zurückgeführt wird. Aus der vor der vorderen Kante 5 zugänglichen Oberfläche 8 der Schaumstoffmatratze 2 können ausgeschnittene Profile 3 manuell ausgezogen werden.

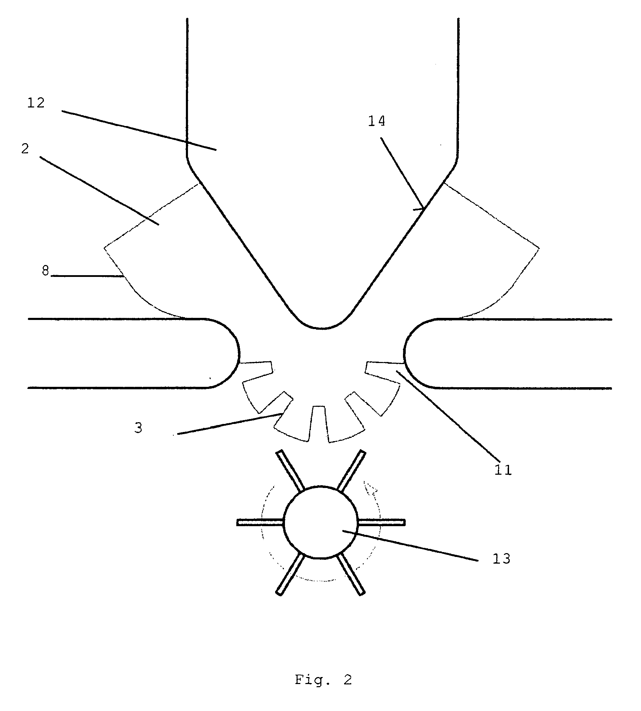

Fig. 2: Entsprechende Merkmale werden mit den Bezugszeichen aus Fig. 1 bezeichnet. Eine Vorrichtung 1 zum Entfernen von aus Schaumstoffmatratzen 2 ausgeschnittenen Profilen zwischen verbleibendem Schaumstoffmaterial 3 weist mindestens ein Transportband auf, auf das die Schaumstoffmatratze 2 aufzulegen ist. Die Schaumstoffmatratze 2 kann bis zu 2,2 m lang, bis 2,2 m breit und 0,1 bis 0,4 m hoch sein. Die Schaumstoffmatratze 2 wird so auf das Transportband aufgelegt, dass mindestens eine der Schnittrichtungen mit ihren Öffnungen nach unten quer zur Transportrichtung liegen.

Die Schaumstoffmatratze 2 wird vom Transportband einer Umlenkvorrichtung zugeführt für Biegung der Schaumstoffmatratze 2 an der Umlenkvorrichtung um vorzugsweise 180°. An der Umlenkvorrichtung sind eine einstellbare Bürstspaltöffnung 11, eine einstellbare Rückendruckrolle 12 und eine einstellbare Bürste 13 vorgesehen. Eine Oberfläche 8 der der Bürstspaltöffnung 11 zugeführten Schaumstoffmatratze 2 ist durch die einstellbare Bürstspaltöffnung 11 zugänglich. Die Bürstspaltöffnung 11 ist auf die Höhe der Schaumstoffmatratze 2 einstellbar.

Eine der zugänglichen Oberfläche 8 der Schaumstoffmatratze 2 gegenüberliegende Oberfläche 14 der Schaumstoffmatratze 2 ist von der Rückendruckrolle 12 in Richtung der Bürstspaltöffnung 11 so beaufschlagbar, dass die durch die einstellbare Bürstspaltöffnung 11 zugängliche Oberfläche 8 der Schaumstoffmatratze 2 gedehnt ist. Die Beaufschlagung mit der Rückendruckrolle 12 in Richtung der Bürstspaltöffnung 11 ist abhängig von der Tiefe der ausgeschnittenen Profile und der Form der Ausschnitte. Je tiefer und je gewundener die Ausschnitte sind desto mehr ist die Rückendruckrolle 12 in Richtung der Bürstspaltöffnung 11 zuzustellen, wobei die Zustellung so zu begrenzen ist, dass die Schaumstoffmatratze 2 nicht einreißt.

Die Bürste 13 ist so zu der durch die einstellbare Bürstspaltöffnung 11 zugänglichen Oberfläche 8 der Schaumstoffmatratze 2 positionierbar, dass die ausgeschnittenen Profile vor der einstellbaren Bürstspaltöffnung 11 von der Bürste erfassbar sind und beim Fördern der Schaumstoffmatratze 2 entlang der Bürstspaltöffnung 11 von der vorzugsweise einstellbar rotierenden Bürste 13 ausgezogen werden können. Die Ausformung der Bürste kann je nach Schaumqualität unterschiedlich sein: Eine Bürste mit dicht stehenden Borsten, eine Bürste mit vereinzelt stehenden Büscheln von Borsten, oder eine Bürste, die mit Lamellen statt Borsten gegen die Schaumoberfläche klopft.
Eine Luftförderanlage (Nicht dargestell) übernimmt die ausgebürsteten Profilkerne und führt sie durch eine Rohrleitung einer Abfallsammelstelle zu, die auch bis zu 80 m weit entfernt sein kann.

Die Vorrichtung 1 ist so aufgebaut, dass die gereinigte Seite nach dem Entkernen mit der gereinigten Oberfläche 8 nach oben auf dem Transportband liegt, so dass kontrolliert werden kann und eventuell einzelne verbliebene Kerne noch manuell herausgepflückt werden können. Mit einem zweiten Startbefehl wird die Matratze 2 auf dem Transportband 9 gegebenenfalls zur Reinigung der anderen Seite 14 wieder der Bürstspaltöffnung 11 zugeführt.

Bei Kreuzschnitten kann nach Drehung der Matratze um 90° auch die quer zum ersten Transport verlaufende Schnittrichtung gereinigt werden, falls wegen der Tiefe der Einschnitte die Entkernung im ersten Durchlauf nur in Längsrichtung erfolgte. Die Matratzen 2 können längs und quer durch die Vorrichtung 1 laufen. Für leicht zu reinigende Profile ist ein Automatikprogramm vorgesehen, das vollständigen Roboterbetrieb ermöglicht.

## Patentansprüche

1. Vorrichtung (1) zum Entfernen von aus Schaumstoffmatratzen (2) ausgeschnittenen Profilen, **dadurch gekennzeichnet, dass** sie besteht aus mindestens einem Transportband, auf das mindestens eine Schaumstoffmatratze (2) auflegbar ist und
mindestens einer Umlenkvorrichtung (10), der die Schaumstoffmatratze (2) vom Transportband zuführbar ist für Biegung der Schaumstoffmatratze (2) um vorzugsweise 180°, wobei an der Umlenkvorrichtung (10) mindestens eine einstellbare Bürstspaltöffnung (11), mindestens eine einstellbare Rückendruckrolle (12) und mindestens eine einstellbare Bürste (13) vorgesehen sind, eine Oberfläche (8) der Schaumstoffmatratze (2) mit ausgeschnittenen Profilen an der einstellbaren Bürstspaltöffnung (11) zugänglich ist und eine der zugänglichen Oberfläche (8) der Schaumstoffmatratze (2) gegenüberliegende Oberfläche (14) der Schaumstoffmatratze (2) von der Rückendruckrolle (12) so beaufschlagbar ist, dass die der einstellbaren Bürstspaltöffnung (11) zugängliche Oberfläche (8) der Schaumstoffmatratze (2) gestreckt ist und die Bürste (13) so zu der durch die einstellbare Bürstspaltöffnung (11) zugänglichen Oberfläche (8) der Schaumstoffmatratze (2) positionierbar ist, dass die in der zugänglichen Oberfläche (8) der Schaumstoffmatratze (2) enthaltenen ausgeschnittenen Profile von der Bürste (13) erfassbar sind.

2. Vorrichtung (1) gemäß Anspruch 1, **dadurch gekennzeichnet, dass** die Umlenkungsgeometrie an die Matratzenform, insbesondere deren Höhe und der Form des Profilschnittes anpassbar ist.

3. Vorrichtung (1) gemäß Anspruch 1, **dadurch gekennzeichnet, dass** die Bürste (13) vorzugsweise einstellbar rotierend angetrieben ist.

4. Vorrichtung (1) gemäß Anspruch 1, **dadurch gekennzeichnet, dass** eine Luftförderanlage an oder direkt unter Bürste (13) oder Bürstspaltöffnung (11) vorgesehen ist, die ausgebürstete Profilkerne übernimmt und sie durch eine Rohrleitung einer Abfallsammelstelle zuführt.

5. Vorrichtung (1) gemäß Anspruch 1, **dadurch gekennzeichnet, dass** Schutzvorrichtungen vorgesehen sind für manuelle Eingriffe an der Bürstspaltöffnung (11).

6. Vorrichtung (1) gemäß Anspruch 1, **dadurch gekennzeichnet, dass** eine speicherprogrammierbare Steuerung vorgesehen ist, in der nach Profilschnitten und/oder Matratzendicke geordnete Einstellungen für Transportbandgeschwindgkeit, Bürstspaltöffnung, Position der Rückendruckrolle und Bürstenposition zur automatischen Steuerung des Herauspflückens der Kerne gespeichert sind.

## Claims

1. A device (1) for removal of profiles cut off from foam mattresses (2), **characterized in that** at least one conveyor is provided said conveyor being appropriate to carry at least one foam mattress (2) and at least one deviation means (10) is provided, towards which the foam mattress (2) is guided by the conveyor for preferably 180°-bending of the foam mattress (2), with the deviation means (10) being provided with at least one adjustable brush gap opening (11), at least one adjustable back pressure roll (12) and at least one adjustable brush (13), a surface (8) of the foam mattress (2) with cut off profiles is accessible at the adjustable brush gap opening (11) and a surface (14) of the foam mattress (2) opposite to the accessible surface (8) of the foam mattress (2) is biased by the back pressure roll (12) in such a way, that the surface (8) of the foam mattress (2), accessible by the adjustable brush gap opening (11), is stretched and **in that** the brush (13) is positioned in such a way relative to the surface (8) of the foam mattress (2) accessible by the adjustable brush gap opening (11) that the cut off profiles contained in the accessible surface (8) of the foam mattress (2) can be seized by the brush (13).

2. The device according to claim 1, **characterized in that** the deviation geometry is adaptable to the mattress shape, particularly to its height and to the shape of the cut of the profile.

3. The device according to claim 1, **characterized in that** the brush (13) is preferably adjustable driven rotational.

4. The device according to claim 1, **characterized in that** an air venting means is provided at or directly below the brush (13) or brush gap opening (11), taking the brushed out profile cores and conveying it through a pipeline towards a waste collect site.

5. The device according to claim 1, **characterized in that** protection devices are provided for manual interceptions at the brush gap opening (11).

6. The device according to claim 1, **characterized in that** a logic controller programmable from memory is provided, having stored calibrations for conveyor speed, brush gap opening, position of the back pressure roll and brush position classified according to profile cuts and/or mattress thickness for automatic control of the picking of the cores.

## Revendications

1. Appareil (1) pour séparer des profils découpés des matelas en mousse (2), characterisé en ce que au moins une bande de transport est pourvue sur laquelle au moins un matelas en mousse (2) peut etre appliqué et au moins un appareil (10) de change de direction, auquel le matelas en mousse (2) est amené par la bande de transport pour de préférence fléchir de 180° le matelas en mousse (2) et en ce que à l'appareil (10) de change de direction au moins est pourvu d'une ouverture de fente de brosse (11) réglable, au moins d'une bobine de pression de l'arrière (12) réglable et au moins d'une brosse (13) réglable, qu'une surface (8) du matelas en mousse (2) avec des profils decoupés est accesssible à l'ouverture de fente de brosse (11) réglable et une surface (14) opposée à la surface (8) accessible du matelas en mousse (2) est pressurisée par la bobine de pression de l'arrière (12), telle que la surface (8) du matelas en mousse (2) accessible par l'ouverture de fente de brosse (11) est étirée et en ce que la brosse (13) est positionée relative à la surface (8) du matelas en mousse (2) accessible par l'ouverture de fente de brosse (11), que les profils decoupés et contenus dans la surface (8) du matelas en mousse (2) peuvent etre saisis par la brosse (13).

2. Appareil (1) selon la revendication 1, characterisé en ce que la géometrie de change de direction est adaptée à la forme du matelas, particulièrement à sa hauteur et à la forme de la coupure du profil.

3. Appareil (1) selon la revendication 1, characterisé en ce que la brosse (13) est entrainée de préférence réglable rotative.

4. Appareil (1) selon la revendication 1, characterisé en ce que un appareil de ventilation d'air est prévu à ou directement sous la brosse (13) ou l'ouverture de fente de brosse (11), qui prend les noyaux des profils brossés et les amène par un tuyau vers une déchetterie.

5. Appareil selon la revendication 1, characterisé en ce que un appareil de protection est pourvu pour des interventions manuelles à l'ouverture de fente de brosse (11).

6. Appareil selon la revendication 1, characterisé en ce que une commande par programme enregistré est prévu avec enregistrement des ajustages de la vitesse de transport, ouverture de fente de brosse, position de la bobine de pression de l'arrière et position de la brosse arrangés selon des profils decoupés et/ou épaisseur du matelas pour une commande automatique de la séparation des noyaux.
